# EUROPÄISCHE PATENTSCHRIFT

(11) **EP 1 819 562 B1**
(45) Veröffentlichungstag und Bekanntmachung des Hinweises auf die Patenterteilung: **28.10.2009**
(21) Anmeldenummer: 04803487.0
(22) Anmeldetag: 03.12.2004
(51) Int. Cl.: B60T 8/00

(54) **ANORDNUNG ZUR BEEINFLUSSUNG DES GIERMOMENTS**
ARRANGEMENT FOR INFLUENCING THE YAWING MOMENT
SYSTEME POUR INFLUER SUR LE MOMENT DE LACET

(30) Priorität: 04.12.2003 DE 10356673
(43) Veröffentlichungstag der Anmeldung: 22.08.2007
(73) Patentinhaber: KNORR-BREMSE Systeme für Nutzfahrzeuge GmbH, 80809 München (DE)
(72) Erfinder: MUSTAPHA, Adnan, 75433 Maulbronn (DE); WÖRNER, Dieter, 75031 Eppingen (DE)
(74) Vertreter: Schönmann, Kurt
(86) Internationale Anmeldenummer: PCT/EP2004/013763
(87) Internationale Veröffentlichungsnummer: WO 2005/054023

(56) Entgegenhaltungen:
- GB-A- 2 323 138
- US-A- 4 783 126
- US-A- 4 872 729
- US-A- 5 328 256

## Beschreibung

Die Erfindung betrifft eine Bremsanlage für ein Kraftfahrzeug, insbesondere für ein Nutzfahrzeug, mit einer Einrichtung zur Giermomentabschwächung an der Vorderachse des Fahrzeugs.

Moderne elektronische Fahrzeug-Bremssysteme, wie beispielsweise ABS- oder EBS-Bremssysteme, haben eine Einrichtung zur Abschwächung von Giermomenten an der Vorderachse, um das Fahrzeug auch auf µ-Split beherrschbar zu machen. Grundsätzlich führen Giermomente, die durch unterschiedliche Roll- oder Haftreibung zwischen den Laufrädern eines Fahrzeugs und dem Untergrund, auf dem es sich bewegt, entstehen, dazu, dass das Fahrzeug von der gewünschten Fahrtrichtung seitlich abweicht. Insbesondere bei Bremsungen in Kurven können Giermomente zum Schleudern des Fahrzeugs führen.

Man ist daher bestrebt, bei der Entwicklung von Bremsanlagen, beispielsweise bei pneumatischen, hydraulischen oder hydraulisch-pneumatischen Bremsanlagen, stets eine ausreichende Fahrzeugstabilität zu gewährleisten und durch angepasste Bremsdrücke das Fahrzeug zu stabilisieren. Die an einer Fahrzeugachse zwischen den Bremszylindern für die Laufräder dieser Achse zulässige Druckdifferenz ist in der Regel ein Kompromiss zwischen Beherrschbarkeit und Lenkbarkeit des Fahrzeugs. Generell gilt, dass ein leeres Fahrzeug mit kurzem Radstand kritischer zu beherrschen ist als ein Fahrzeug mit langem Radstand. Da die bei einem in verschiedenen Fahrzeugtypen eingesetzten Bremssystem zulässige Druckdifferenz zwischen den jeweiligen Bremszylindern sich nach dem kritischen Fahrzeugtypen richten muss, werden bei Fahrzeug mit langem Radstand bei Einsatz dieses Bremssystems die möglichen Bremsdrücke nicht ausgeschöpft.

Beispielsweise ist aus der DE 199 39 035 A1 eine Bremsanlage für Fahrzeuge, insbesondere für Nutzfahrzeuge, bekannt, bei der ein Sensor zum Sensieren einer physikalischen Größe vorgesehen ist, die sich beim Einsteuern eines vom Fahrer vorgegebenen Bremsdrucks einstellt. Bei der bekannten Bremsanlage ist ein mit einem ABS-Ventil verbundener hydraulisch-pneumatischer Wandler vorgesehen, der einem dem Wandler pneumatisch eingesteuerten Bremsdruck in einen hydraulischen Bremsdruck für eine Fahrzeugbremse umwandelt. Der Sensor ist in den Wandler integriert und spricht dann an und erzeugt ein Warnsignal, wenn beim Belüften des pneumatisch-/hydraulischen Wandlers ein Pneumatik-Kolben des Wandlers in einer Anschlagstellung ist.

In der US-A-4 872 729 ist eine Bremsanlage für ein Kraftfahrzeug offenbart, mit einer Einrichtung zur Messung des Schlupfes an der Hinterachse und einer Regeleinrichtung zur Beeinflussung des Bremsdrucks an den Vorderrädern, die in Abhängigkeit von dem gemessenen Schlupf an der Hinterachse den Bremsdruck an den Vorderrädern begrenzt.

Es ist die Aufgabe der Erfindung, eine Bremsanlage der eingangs genannten Art so zu verbessern, dass die Fahrsicherheit durch eine Reduktion des Giermoments erhöht wird.

Erfindungsgemäß wird diese Aufgabe dadurch gelöst, dass eine Einrichtung zur Messung des Schlupfs und/oder eine Einrichtung zur Messung der Last an der Hinterachse oder an zwei auf einander gegenüberliegenden Seiten angeordneten Laufrädem der Hinterachse des Fahrzeugs t und eine Stell- oder Regeleinrichtung zur Beeinflussung des Bremsdrucks an den Vorderrädern vorhanden ist, die in Abhängigkeit von dem gemessenen Schlupf und/oder in Abhängigkeit von der gemessenen Last an der Hinterachse bzw. an den Laufrädem der Hinterachse den Bremsdruck an den Vorderrädern begrenzt, wobei die Stell- oder Regeleinrichtung die Differenz des Bremsdrücke an den Vorderrädern mit einem Wert multipliziert, der kleiner als 1 ist.

Auf diese Weise wird zum einen der an der Hinterachse gemessene Schlupf für das Bremsverhalten der Vorderachse berücksichtigt. Zum andern ergibt sich bei hoher Hinterachslast eine hohe Seitenführungskraft, so dass das zulässige Giermoment an der Vorderachse im Vergleich zu einem leeren Fahrzeug erhöht werden kann. Dies bedeutet, dass bei niedriger Last an der Hinterachse die zulässige Druckdifferenz der Laufräder an der Vorderachse und damit das Giermoment an dieser Achse auf einen kleinen Wert begrenzt wird.

Der Faktor ist um so kleiner, je kleiner die Last an der Hinterachse ist. Bei einer Last, die zu hundert Prozent der maximalen Last entspricht, ergibt sich ein Lastfaktor von 1. Bei einer geringeren Last ergeben sich entsprechend niedrigere Werte.

Sowohl im Falle einer auf der Messung des Schlupfes als auch der Last beruhenden Regelung können die Werte für die zulässige Bremsdruckdifferenz an der Vorderachse auch durch Interpolation gewonnen werden.

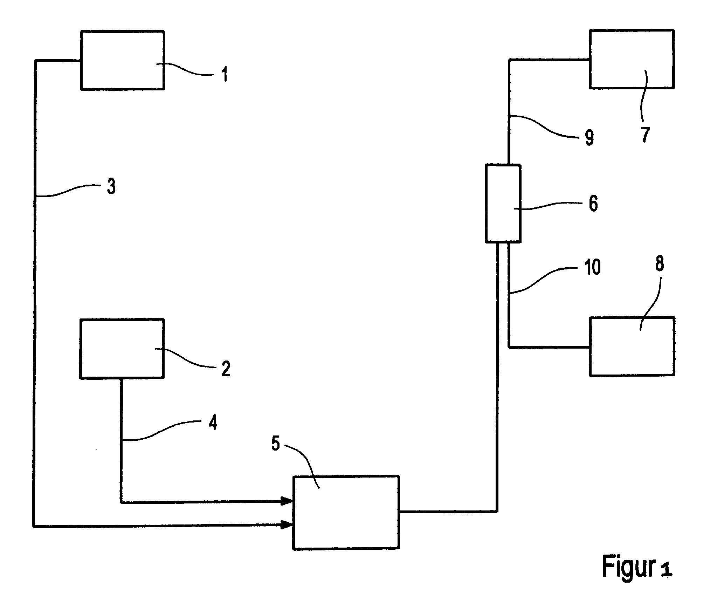

Nachstehend wird die Erfindung in einem Ausführungsbeispiel anhand der einzigen Figur näher erläutert. Diese zeigt ein stark vereinfachtes Schema einer Bremsanlage.

Ein Fahrzeug hat eine Hinterradachse mit zwei Laufrädern, an denen jeweils eine Messeinheit 1, 2 angeordnet ist, um den an jedem der beiden Laufräder auftretenden Schlupf zu messen.

Die von den Messeinheiten 1, 2 gemessenen Werte werden über Datenleitungen 3, 4 an eine Stell- oder Regeleinheit 5 weitergeleitet. Diese erzeugt aus den erhaltenen Werten einen Maximalwert für die noch zulässige Druckdifferenz an den Vorderrädern und gibt diesen an eine Messeinheit 6 weiter, der die Druckwerte von Bremszylindern 7, 8 an den Vorderrädern zugeleitet werden.

Aus der Druckdifferenz und/oder den jeweils an den Bremszylindern 7, 8 gemessenen Werten bestimmt die Stell- oder Regeleinrichtung 5 den jeweils je Bremszylinder 7, 8 zulässigen maximalen Druck oder gibt reduzierte Werte für jeden einzelnen Bremszylinder 7, 8 vor, die jeweils entweder über die Messeinheit 6 oder unmittelbar an die Bremszylinder 7, 8 weitergeleitet werden.

Statt die Werte für den Schlupf an beiden Laufrädern der Hinterachse zu gewinnen, reicht es in einer einfacheren Ausführung auch aus, lediglich von der Hinterachse selbst den Schlupf abzugreifen.

Außerdem lässt sich vorsehen, durch Interpolation für alle möglichen Schlupfwerte an der Hinterachse Werte für maximal zulässige Druckdifferenzen an der Vorderachse in einer Tabelle zu hinterlegen und dadurch festzulegen.

Anstelle einer Schlupfmessung an der Hinterachse des Fahrzeugs lassen sich auch die jeweiligen Achslasten bestimmen und daraus Werte für die zulässigen Druckdifferenzen an den Bremszylindern 7, 8 der Vorderachse ableiten.

Ebenso ist es auch möglich, die Werte für den Schlupf und für die Last mit einander zu verknüpfen und daraus eine zulässige Druckdifferenz für die vorderen Bremszylinder 7, 8 zu erzeugen. Dabei lassen sich Wertetabellen aufstellen, nach denen die Drücke in den Bremszylindern 7, 8 auf jeweils maximal zulässige Werte festgesetzt werden.

Auch die zeitlichen Abstände der Messungen des Schlupfs lassen sich in der Praxis situationsangepasst normieren. Oder es werden feste Tabellen je Fahrzeug und je Messvorrichtung eingegeben, um stets die Sicherheit des Fahrzeugs auch wechselnden Bodenbelägen zu gewährleisten.

## Patentansprüche

1. Bremsanlage für ein Kraftfahrzeug, insbesondere für ein Nutzfahrzeug, mit einer Einrichtung zur Giermomentabschwächung an der Vorderachse des Fahrzeugs, wobei eine Einrichtung zur Messung des Schlupfs und/oder eine Einrichtung zur Messung der Last an der Hinterachse oder an zwei auf einander gegenüberliegenden Seiten angeordneten Laufrädem der Hinterachse des Fahrzeugs und eine Stell- oder Regeleinrichtung zur Beeinflussung des Bremsdrucks an den Vorderrädern vorhanden ist, die in Abhängigkeit von dem gemessenen Schlupf und/oder in Abhängigkeit von der gemessenen Last an der Hinterachse bzw. an den Laufrädem der Hinterachse den Bremsdruck an den Vorderrädern begrenzt, wobei die Stell- oder Regeleinrichtung die Differenz des Bremsdrücke an den Vorderrädern mit einem Wert multipliziert, der kleiner als 1 ist.

## Claims

1. A brake system for a motor vehicle, in particular for a utility vehicle, with a device for reducing the yawing moment on the front axle of the vehicle, wherein a device for measuring the slip and/or a device for measuring the load on the rear axle or on two running wheels of the rear axle of the vehicle arranged on sides opposite one another is present and a regulating or control device for influencing the brake pressure on the front wheels is present which limits the brake pressure on the front wheels depending on the measured slip and/or depending on the measured load on the rear axle or on the running wheels of the rear axle, the regulating or control device multiplying the difference of the brake pressures on the front wheels by a value which is smaller than 1.

## Revendications

1. Système de freinage pour un véhicule automobile, en particulier un véhicule utilitaire, comprenant un système à affaiblir le moment de lacet à l'essieu avant du véhicule, dans lequel un moyen à mesurer le patinage et/ou un moyen à mesurer la charge à l'essieu arrière ou à deux roues de roulement disposées aux côtés opposés l'un à l'autre sur ledit essieu arrière du véhicule, ou un moyen d'ajustage ou de réglage sont disposés afin de prendre de l'influence sur la pression de freinage aux roues avant, lequel moyen limite la pression de freinage aux roues avant en fonction du patinage mesuré et/ou en fonction de la charge mesurée à l'essieu arrière ou respectivement aux roues de roulement à l'essieu arrière, audit moyen d'ajustage ou de réglage multiplie la différence entre les pressions de freinage aux roues avant par une valeur inférieure à 1.
